# EUROPEAN PATENT APPLICATION

(11) **EP 2 312 728 A2**
(43) Date of publication of application: **20.04.2011**
(21) Application number: 09177156.8
(22) Date of filing: 26.11.2009
(51) Int. Cl.: H02K 1/27

(54) **Rotor for electromotor using permanent magnets**

(30) Priority: 19.10.2009 KR 20090099280
(71) Applicant: Jeung, Young-Chun, Cypress, CA 90630 (US)
(72) Inventor: Jeung, Young-Chun, Cypress, CA 90630 (US)
(74) Representative: Rupp, Christian

(57) **Abstract**

There is disclosed a rotor for an electromotor using permanent magnets. The rotor comprises one or more C-type permanent magnets 9, a core 10, and a rotor shaft 15.
Each of the one or more C-type permanent magnets 9 has a C shape and provides magnetic force. The core 10 has a cylindrical shape and has the one or more C-type permanent magnets 9 coupled thereto with different magnetic poles.
An aperture 11 is formed at each of the boundaries of the C-type permanent magnets 9 having the different magnetic poles. The rotor shaft 15 is formed at the center of the core 10. Cogging torque can be reduced because a magnetic field of the C-type permanent magnets coupled through the outside core forms a normal sine wave form.

## Description

### BACKGROUND OF THE INVENTION

### Field of the Invention

The present invention relates to a rotor for an electromotor using permanent magnets, and more particularly, to a rotor for a high-capacity and high-output brushless motor using high-characteristic permanent magnets, which is capable of reducing cogging and noise of the rotor.

### Background of the Related Art

In general, the rotor of permanent magnets is configured to generate mechanical rotation torque through a reciprocal operation with the rotating magnetic field of an armature. A rotor system is irregular or a magnetic field distribution of the rotor is not an ideal one, such as a sine wave, because of several causes, such as the coupling structure of a rotor core and permanent magnet bodies, a magnetizing pattern, the magnetic poles of the armature, and slot structures. Accordingly, cogging torque is generated and vibration and noise are generated in the motor, which are the greatest cruses of those having ordinary skill in the art or the industry.

In particular, a high-capacity and high-power brushless motor requires a rotor using high-characteristic permanent magnets having a high energy density. However, there is a problem in that such a phenomenon becomes profound in a high-capacity and high-output motor having a smaller air gap between the armature and the rotor.

Here, the high-characteristic permanent magnet refers to a permanent magnet with a high magnetic energy density, such as a neodymium (Nd)-series or samarium cobalt (SmCo)-series magnet having a surface magnetic flux of 1 Kgauss or more. Such a high-characteristic permanent magnet is difficult for radial magnetization in a centrifugal direction or magnetic pole anisotropic magnetization although they are of type, such as a C-type permanent magnet for a rotor. The permanent magnet cannot form an ideal sine wave or a conical magnetic field, has low efficiency through a reaction to the rotating magnetic field of the armature because of distortion, and generates severe cogging torque, rotating vibration, and noise.

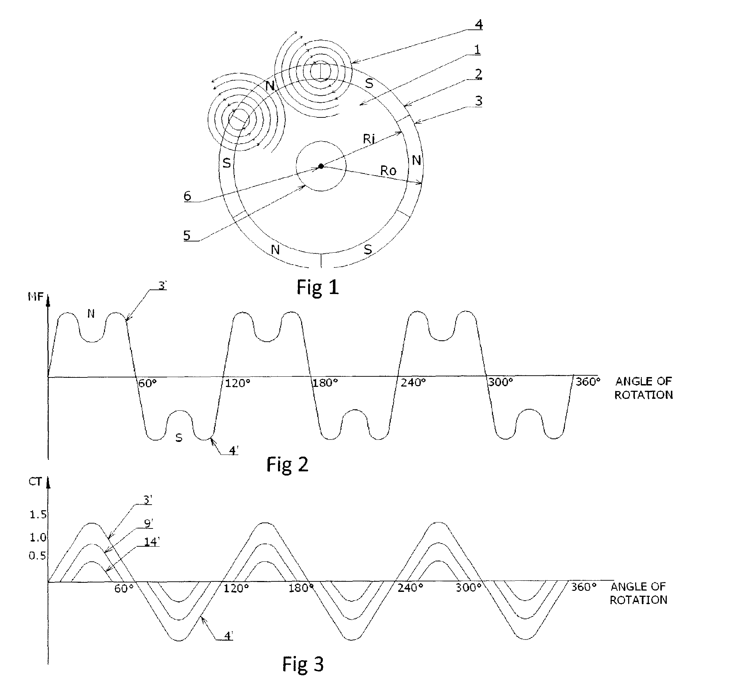

The conventional rotor for permanent magnets, as shown in FIG. 1, includes C-type permanent magnet bodies formed in parallel to maintain a circumferential diameter Ro around the center 6 and each configured to have a predetermined thickness. The C-type permanent magnet bodies having alternating S poles 2 and N poles 3 are adhered to a surface Ri of a rotor core 1. The rotor core 1 is made of a magnetic material and is configured to have a center hole 5 into which a rotor shaft will be inserted.

In the rotor in which the C-type permanent magnet bodies are adhered to the rotor core 1 made of a ferromagnetic material as described above, the permanent magnet bodies form magnetic fields 4 through the rotor core 1, but, as shown in FIG. 2, a distribution of the magnetic fields of the permanent magnet bodies does not form an ideal sine wave magnetic field and has depressed dual peaks 3' and 4' at the tip of each of the magnetic poles.

If the conventional permanent magnet rotor drives a motor with it being coupled with the armature, it generates pieces of significant cogging torque 3' and 4' because of severe rotor-series curves that are generated by an interaction with the armature poles as shown in FIG. 3.

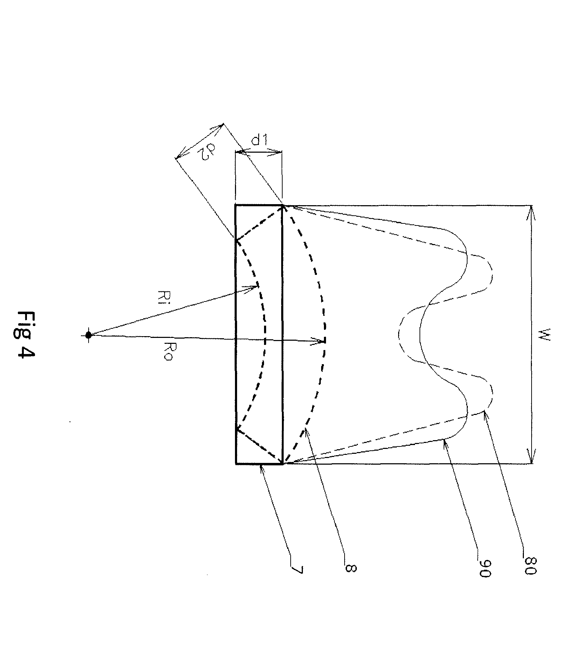

In the case where the magnetic body is magnetized using uniform magnetic particles so that it has a predetermined thickness d1 and a predetermined length L as shown in FIG. 4, there are problems in that a magnetic field distribution 90 having two peaks is formed because of the intensity of a magnetic field that is in inverse proportion to the square of a distance from an opposite pole in the case of a flat-type magnet body 7, and a magnetic field is severely distorted (80) in the case of a C-type magnet body 8 for a rotor having a circumference having a predetermined thickness d2, an inside diameter Ri, and an outside diameter Ro.

In order to solve the problems, in a conventional rotor for ferrite C-type permanent magnets, branch powders are arranged in the radial direction or anisotropically, sintered, and magnetized in its manufacturing process. However, such a magnetic arrangement and magnetizing method is not convenient for a high-characteristic alnico, Nd, or SmCo-series magnet formed through casting. Accordingly, there is a problem in that, if the magnetic arrangement and magnetizing method is used to manufacture a motor rotor using magnets, the above-described problems cannot be solved.

### SUMMARY OF THE INVENTION

Accordingly, the present invention has been made in view of the above problems occurring in the prior art, and it is an object of the present invention to provide a rotor for an electromotor using permanent magnets, which facilitates the fabrication of a high-capacity and high-power brushless motor using high-characteristic magnets with a high magnetic energy density and can reduce cogging torque to the minimum extent and obtain silent rotation force.

To achieve the above object, a rotor for an electromotor using permanent magnets according to the present invention may comprise one or more C-type permanent magnets 9, a core 10, and a rotor shaft 15. Each of the one or more C-type permanent magnets 9 has a C shape and provides magnetic force. The core 10 has a cylindrical shape and has the one or more C-type permanent magnets 9 coupled thereto with different magnetic poles. An aperture 11 is formed at each of the boundaries of the C-type permanent magnets 9 having the different magnetic poles. The rotor shaft 15 is formed at the center of the core 10.

### BRIEF DESCRIPTION OF THE DRAWINGS

Further objects and advantages of the invention can be more fully understood from the following detailed description taken in conjunction with the accompanying drawings in which:

FIG. 1 is a cross-sectional view of a conventional rotor for an electromotor using permanent magnets;

FIG. 2 is a diagram showing a sine wave of the conventional rotor for an electromotor using permanent magnets shown in FIG. 1;

FIG. 3 is a diagram showing cogging torque of the conventional rotor for an electromotor using permanent magnets shown in FIG. 1;

FIG. 4 is a diagram showing the shape of a sine wave according to the permanent magnets in the conventional rotor for an electromotor using the permanent magnets shown in FIG. 1;

FIG. 5 is a perspective view of a rotor for an electromotor using permanent magnets according to the present invention;

FIG. 6A is a cross-sectional view of a core of the rotor for an electromotor using permanent magnets according to the present invention shown in FIG. 5;

FIG. 6B is a perspective view of the core of the rotor for an electromotor using permanent magnets according to the present invention shown in FIG. 5;

FIG. 7A is a perspective view of the permanent magnet of the rotor for an electromotor using permanent magnets according to the present invention shown in FIG. 5;

FIG. 7B is a perspective view showing the dimensions of the permanent magnet of the rotor for an electromotor using permanent magnets according to the present invention shown in FIG. 5;

FIG. 8 is a cross-sectional view of a magnetic characteristic of the permanent magnets in the rotor for an electromotor using permanent magnets according to the present invention shown in FIG. 5; and

FIG. 9 is a diagram showing a sine wave characteristic of the rotor for an electromotor using permanent magnets according to the present invention shown in FIG. 5.

<Description of reference numerals of principal elements in the drawings>

9: permanent magnet 10: core

10-1: outside core 10-2: inside core

11: aperture 15: rotor shaft

### DETAILED DESCRIPTION OF THE PREFERRED EMBODIMENT

The present invention will now be described in detail in connection with a specific embodiment with reference to the accompanying drawings.

A detailed description of a specific embodiment provides several descriptions of the specific embodiment of the present invention. The present invention, however, can be implemented using several methods that are limited by and covered with the claims. The detailed description is given with reference to the accompanying drawings in which the same reference numerals are used to denote the same elements or functionally similar elements.

Terms used in the detailed description of the specification should not be construed as limiting or restricting the present invention to a specific method because they are used for a detailed description of the specific embodiment of the present invention. Furthermore, the embodiment of the present invention may have preferred attributes of the present invention or include several new characteristics indispensable to implement the invention provided in the specification.

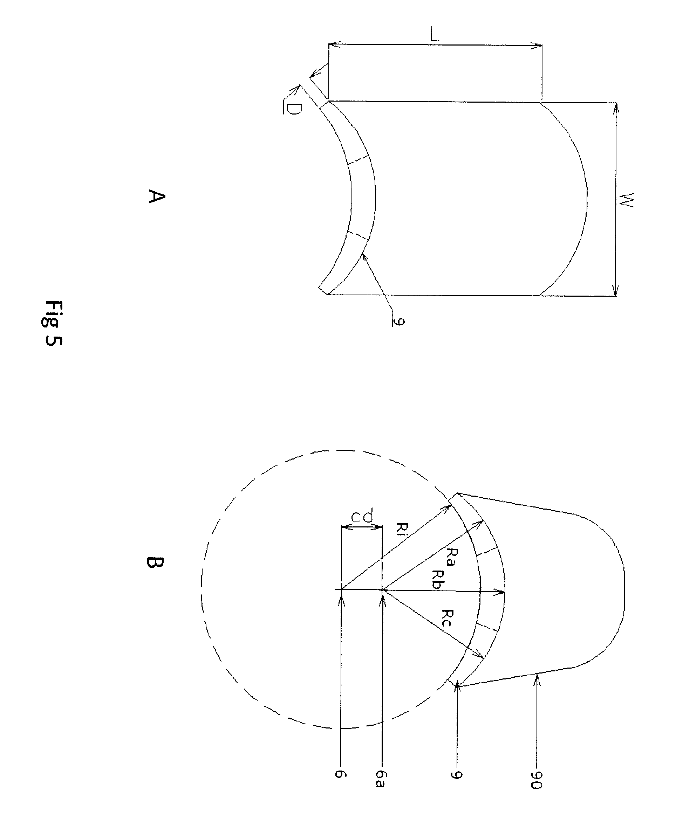

FIG. 5 is a perspective view of a rotor for an electromotor using permanent magnets according to the present invention.

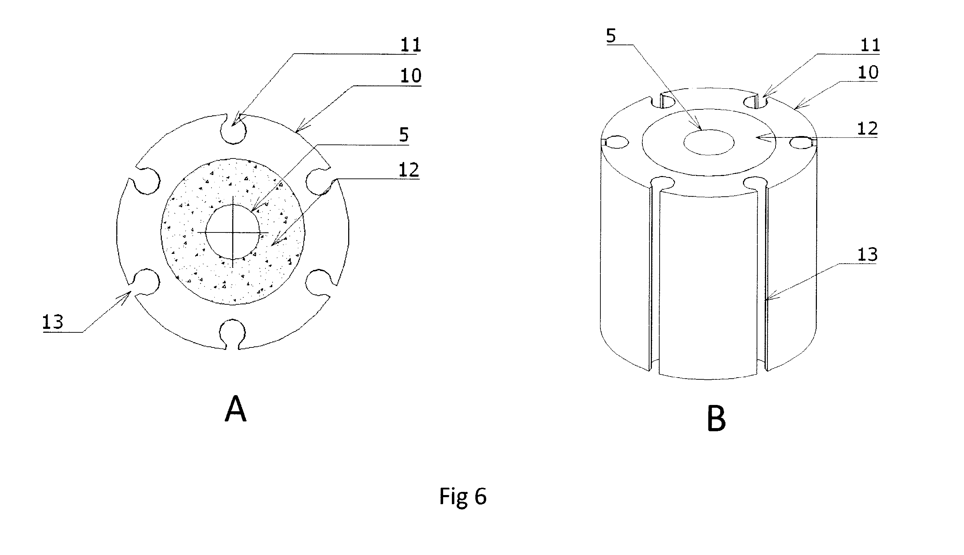

FIG. 6A is a cross-sectional view of a core of the rotor for an electromotor using permanent magnets according to the present invention shown in FIG. 5, and FIG. 6B is a perspective view of the core of the rotor for an electromotor using permanent magnets according to the present invention shown in FIG. 5.

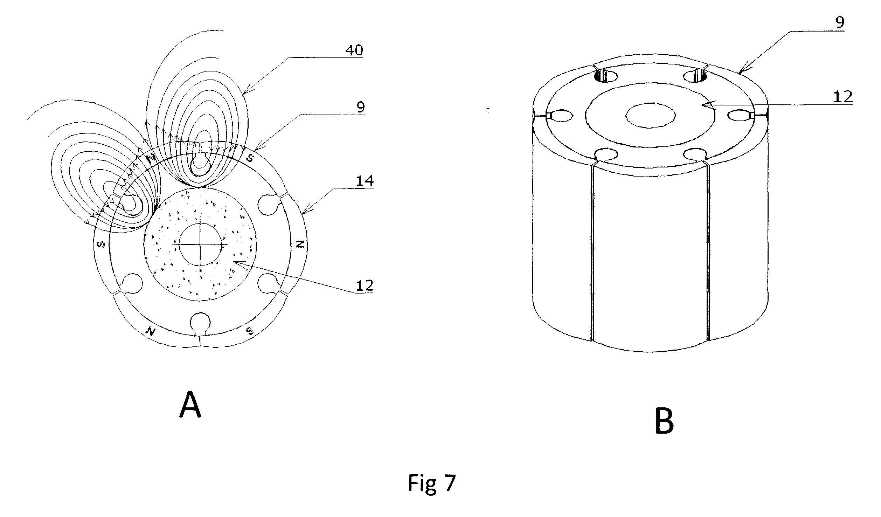

FIG. 7A is a perspective view of the permanent magnet of the rotor for an electromotor using permanent magnets according to the present invention shown in FIG. 5, and FIG. 7B is a perspective view showing the dimensions of the permanent magnet of the rotor for an electromotor using permanent magnets according to the present invention shown in FIG. 5.

The rotor for an electromotor using permanent magnets according to an embodiment of the present invention includes one or more C-type permanent magnets 9, a core 10 having an outside core 10-1 and an inside core 10-2, apertures 11, and a rotor shaft 15.

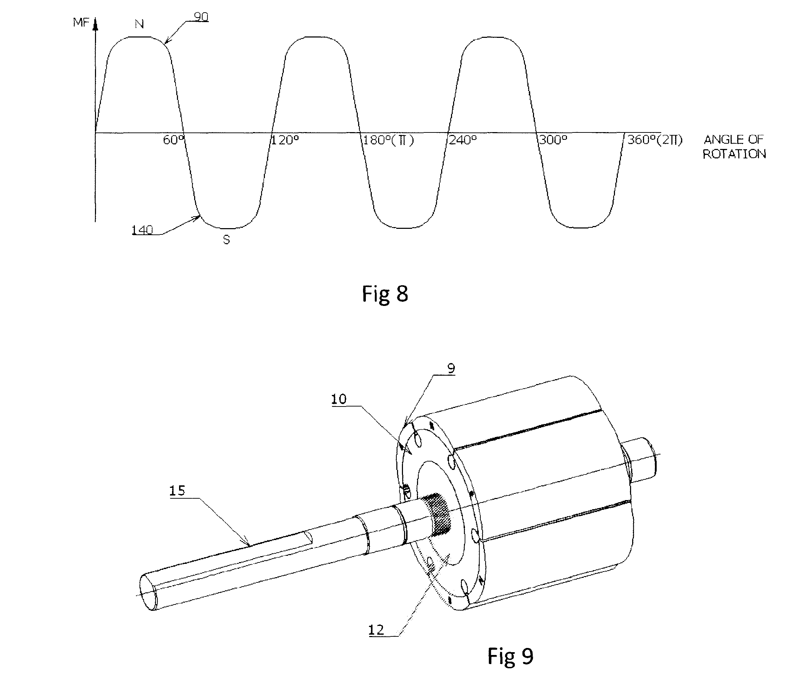

Each of the C-type permanent magnets 9 has an outer circumferential face having two or more different outside diameters Ra= Rb, Rc and centrifugal axes 6 and 6a and also has the same inside diameter Ri as the centrifugal axis 6 of a real circle and a predetermined length L and a predetermined width W. When coupling, for example, the two C-type permanent magnets 9 with the outside core 10-1, they have different magnetic poles as shown in FIG. 8. In this case, the boundary between the C-type permanent magnets 9 is placed at each of the apertures 11 of the outside core 10-1.

When coupling the one or more C-type permanent magnets 9 with the outside core 10-1, the C-type permanent magnets 9 have different magnetic poles on the basis of the boundary therebetween, and the boundary is placed at each of the apertures 11. The inside core 10-2 is configured to have a cylindrical shape and is formed within the outside core 10-1. The rotor shaft 15 is formed at the center of the inside core 10-2.

The aperture 11 functions to increase a magnetic path between the boundaries of the magnetic poles of the C-type permanent magnets 9 to the maximum extent and to shorten a central passage of a magnetic field. Thus, although the C-type permanent magnets are adhered to the outside core 10-1, a distribution of magnetic fields is not distorted, and an ideal sine wave magnetic field can be formed.

Furthermore, the apertures 11 may have various sizes. The shape or size of the apertures 11 can be determined according to a magnetic characteristic or a core design of the C-type permanent magnet 9. (The aperture 11 may have, for example, a circular or elliptical section).

Through the above configuration, as shown in FIG. 8, magnetic fields of the C-type permanent magnets 9 revolve around the respective apertures 11 and form more many magnetic passages toward their centers. Accordingly, an ideal sine wave magnetic field in which a magnetic field at the boundary between the magnetic poles is weak and a magnetic field at the central portion of each magnetic pole is strong can be formed. That is, when a sine wave magnetic field, such as that shown in FIG. 9, is formed, cogging torque can be reduced by about 30% as compared to a conventional rotor having a distorted magnetic field.

Furthermore, the inside core 10-2 is made of a nonmagnetic material. Accordingly, cogging torque and vibration applied to the rotating shaft 15 can be reduced by about 60 to 70%.

As described above, according to the present invention, the rotor for an electromotor using the permanent magnets has an excellent advantage in that it can reduce cogging torque because magnetic fields of the C-type permanent magnets coupled with the outside core form a normal sine wave magnetic field.

Furthermore, the inside core is made of rubber or a silicon material, and it has a porous sound absorption/dustproof structure having a honeycomb shape. Accordingly, there is an excellent advantage in that cogging torque and vibration transferred to the rotating shaft can be reduced.

While the present invention has been described with reference to the particular illustrative embodiment, it is not to be restricted by the embodiment but only by the appended claims. It is to be appreciated that those skilled in the art can change or modify the embodiment without departing from the scope and spirit of the present invention.

## Claims

1. A rotor for an electromotor using permanent magnets, comprising:
one or more C-type permanent magnets 9 each configured to have a C shape and provide magnetic force;
a core 10 configured to have a cylindrical shape and have the one or more C-type permanent magnets 9 coupled thereto with different magnetic poles, wherein an aperture 11 is formed at each of boundaries of the C-type permanent magnets 9 having the different magnetic poles; and
a rotor shaft 15 formed at a center of the core 10.

2. The rotor as claimed in claim 1, wherein each of the C-type permanent magnets 9 has an outer circumferential face having two or more different outside diameters Ra = Rc, Rb and centrifugal axes 6 and 6a, a same inside diameter Ri as the centrifugal axis 6 of a real circle, and a predetermined length L and a predetermined width W.

3. The rotor as claimed in claim 1, wherein the core 10 comprises:
an outside core 10-1 configured to have a cylindrical shape and have the one or more C-type permanent magnets 9 with the different magnetic poles coupled to an outside of the outside core 10-1, the aperture 11 being formed at each of the boundaries of the C-type permanent magnets 9 on the outside of the outside core 10-1; and
an inside core 10-2 configured to have a cylindrical shape and formed within the outside core 10-1, the rotor shaft 15 being formed at a center hole 5 of the inside core 10-2.

4. The rotor as claimed in claim 1 or 2, wherein:
the aperture 11 has a circular or elliptical section, and
a size of the aperture 11 is controlled according to a magnetic characteristic of the C-type permanent magnets 9 and a magnetic design of the motor.

5. The rotor as claimed in claim 3, wherein the inside core 10-2 is made of rubber or a silicon material and is configured to have a honeycomb-shaped sound absorption and dustproof structure.

6. The rotor as claimed in claim 1, wherein each of the C-type permanent magnets 9 includes a neodymium (Nd)-series or samarium cobalt (SmCo)-series magnet having a surface magnetic flux of 1 Kgauss or more.
